# EUROPÄISCHE PATENTANMELDUNG

(11) **EP 2 608 387 A1**
(43) Veröffentlichungstag der Anmeldung: **26.06.2013**
(21) Anmeldenummer: 11194193.6
(22) Anmeldetag: 19.12.2011
(51) Int. Cl.: H02M 7/487, H02M 7/49

(54) **Stromrichterschaltung**

(71) Anmelder: Siemens Aktiengesellschaft, 80333 München (DE)
(72) Erfinder: Hiller, Marc, Dr., 91207 Lauf an der Pegnitz (DE); Weis, Benno, Dr., 91334 Hemhofen (DE)

(57) **Zusammenfassung**

Es wird eine Stromrichterschaltung (4) für einen Fahrantrieb (1) eines Elektro-Fahrzeugs angegeben. Die Stromrichterschaltung (4) umfasst wenigstens zwei Submodule (11) in Reihenschaltung und bezieht über eine Induktivität (10) elektrische Leistung aus einer eine Gleichspannung (Ub) abgebenden Leistungsquelle (5). Jedes Submodul (11) weist eingangsseitig eine einphasige Halbbrücke (20,20a,20b) und lastseitig eine einphasige Vollbrücke (21) auf. Die Halbbrücke (20,20a,20b) und die Vollbrücke (21) sind dabei gleichspannungsseitig zusammen mit einer Zwischenkreiskapazität (22) parallel zueinander in einen Zwischenkreis (25) geschaltet. Die Vollbrücke (21) mindestens eines Submoduls (11) ist zu einem Drei-Punkt-Stromrichter erweitert.

## Beschreibung

Die Erfindung betrifft eine Stromrichterschaltung gemäß dem Oberbegriff des Anspruchs 1 sowie einen Fahrzeugantrieb mit einer solchen Stromrichterschaltung.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al., "Modularer Hochfrequenz Umrichter für Fahrzeugantriebe", EMA 2010, 08. bis 09. September 2010, Aschaffenburg bekannt.

Die bekannte Stromrichterschaltung ist zum Umwandeln einer Gleichspannung aus einer elektrischen Leistungsquelle in mehrere Wechselspannungen vorgesehen. Die einzelnen Wechselspannungen werden dabei durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegeben werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung mittels eines Hochsetzstellers erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind im Inneren des jeweiligen Submoduls gleichspannungsseitig verschaltet.

Parallel zu der Vollbrücke und zu der Eingangshalbbrücke ist in jedem Submodul ein Zwischenkreiskondensator verschaltet, der elektrische Energie, beispielsweise aus einem Blindleistungsfluss von den Motorwicklungen, zwischenspeichern kann.

Der bekannte Modulare Hochfrequenz-Umrichter hat gegenüber klassischen Umrichtertopologien insbesondere den Vorteil, dass er infolge kleiner Spannungen pro Submodul mit entsprechend klein dimensionierten Bauteilen, und somit besonders kompakt, leicht (d.h. mit geringem Gewicht) und unaufwändig aufbaubar ist. Die vergleichsweise große Submodulanzahl, die erforderlich ist, um auf der Ebene der einzelnen Submodule mit hinreichend kleinen Spannungen arbeiten zu können, bedingt aber andererseits eine große Anzahl von Motorleitungen und Motorwicklungen, die die Baugröße, das Gewicht und den Herstellungsaufwand des gesamten Fahrantriebs nachteiligerweise wiederum vergrößern. Die mit dem Modularen Hochfrequenz-Umrichter erzielten Vorteile werden dabei durch die beschriebenen Nachteile zumindest teilweise aufgewogen.

Der Erfindung liegt die Aufgabe zugrunde, eine diesbezüglich verbesserte Stromrichterschaltung und einen diesbezüglich verbesserten Fahrzeugantrieb anzugeben.

Bezüglich der Stromrichterschaltung wird die Aufgabe erfindungsgemäß gelöst durch die Merkmale des Anspruchs 1. Bezüglich des Fahrzeugantriebs wird die Aufgabe erfindungsgemäß gelöst durch die Merkmale des Anspruchs 7. Vorteilhafte Ausgestaltungsformen und Weiterbildungen der Erfindung sind Gegenstand der abhängigen Ansprüche.

Die Stromrichterschaltung umfasst danach wenigstens zwei Submodule in Reihenschaltung, wobei die Stromrichterschaltung, und damit deren Submodule über eine Induktivität elektrische Leistung aus einer eine Gleichspannung abgebenden Leistungsquelle beziehen. Jedes Submodul weist eingangsseitig eine einphasige Halbbrücke (auch: Eingangshalbbrücke) und lastseitig eine einphasige Vollbrücke (auch: Ausgangsvollbrücke) auf. Die Halbbrücke und die Vollbrücke sind dabei gleichspannungsseitig parallel zueinander in einen Zwischenkreis geschaltet. Parallel zu der Halbbrücke und der Vollbrücke ist in den Zwischenkreis ferner eine Zwischenkreiskapazität geschaltet.

Die ausgangsseitig bzw. lastseitig in jedem Submodul angeordnete Vollbrücke umfasst in an sich üblicher Ausgestaltung insbesondere zwei (Ausgangs-)Halbbrücken, zwischen deren Mittelabgriffen die dem Submodul zugeordnete Last, insbesondere also eine Motorphase (Motorwicklung) angeklemmt ist. Die durch den Mittelabgriff getrennten Teil einer jeden Halbbrücke sind nachfolgend auch als "Zweige" der jeweiligen Halbbrücke bezeichnet.

Erfindungsgemäß ist hierbei die Vollbrücke mindestens eines Submoduls zu einem Drei-Punkt-Stromrichter erweitert. Vorzugsweise sind die Vollbrücken aller Submodule zu Drei-Punkt-Stromrichtern erweitert.

Als Drei-Punkt-Stromrichter ist hierbei ein Stromrichter bezeichnet, dessen Ausgangs-Klemmen jeweils auf eines von drei elektrischen Potentialniveaus ("+", "0" und "-") geschaltet werden können. Im Gegensatz zu einem solchen Drei-Punkt-Stromrichter handelt es sich bei einer normalen Vollbrücke regelmäßig um einen Zwei-Punkt-Stromrichter, dessen Ausgangs-klemmen lediglich mit zwei Potentialniveaus ("+" und "-") beschaltbar sind. Durch Verkettung der an den beiden Ausgangs-klemmen jeweils anliegenden elektrischen Potentiale können bei einem Drei-Punkt-Umrichter insgesamt fünf Spannungsniveaus erzeugt werden.

Durch die von dem normalen Design des MHF-Umrichters abweichende Ausführung der ausgangsseitigen Vollbrücke kann bei gegebener Anzahl der Submodule eine besonders feine Spannungsstufung an dem oder jedem Motor erzielt werden. Im Vergleich zu einem gewöhnlichen MHF-Stromrichter kann insbesondere eine gegebene Spannungsstufung mit der halben Anzahl an Motorwicklungen und Motorleitungen erreicht werden, was eine entsprechende Bauraumreduzierung und Gewichtseinsparung mit sich bringt. Vorteile der feinen Spannungsstufung sind dabei insbesondere auch ein reduziertes Oberschwingungsspektrum der Motorspannung bei gleicher Schaltfrequenz und, daraus resultierend, reduzierte Motorverluste durch bessere Stromkurvenform sowie reduzierte Geräusche durch höhere resultierende Schaltfrequenz (ggf. insbesondere im nicht mehr hörbaren Bereich).

In einer vorteilhaften Ausführungsform der Erfindung ist zur Bereitstellung der drei benötigten Potentialniveaus als Zwischenkreiskapazität anstelle des einzelnen Zwischenkreiskondensators eines gewöhnlichen MHF-Umrichters eine Reihenschaltung mindestens zweier Zwischenkreiskondensatoren vorgesehen. Das an einem Mittelabgriff dieser Reihenschaltung anliegende Mittenpotential ist hierbei zur Realisierung des Drei-Punkt-Stromrichters über eine entsprechende Schalteinrichtung mit der Vollbrücke des jeweiligen Submoduls verschaltet, so dass das Mittenpotential reversibel an einem jeweiligen Mittelabgriff jeder der beiden Halbbrücken der Vollbrücke anlegbar ist.

In einer zweckmäßigen Bauform der solchermaßen zu dem Drei-Punkt-Stromrichter erweiterten Vollbrücke sind beide Zweige jeder der beiden Ausgangshalbbrücken doppelt mit Schaltern belegt. In jedem der vier Zweige der Vollbrücke ist mit anderen Worten eine Serienschaltung von jeweils zwei Schaltern angeordnet. Das Mittenpotential ist hierbei jeweils über eine Diode zwischen den beiden Schaltern eines Zweiges angeklemmt, wobei die Dioden mit ihrer Sperrrichtung in das an die Vollbrücke angelegte Potentialgefälle geschaltet sind. In einer alternativen Ausführung sind anstelle der vorstehend beschriebenen Dioden aktive Schalter vorgesehen. Dies ermöglicht eine flexiblere Gestaltung der Strompfade innerhalb des Submoduls und somit eine besonders gute Symmetrisierung der Schaltverluste in dem Submodul.

In einer weiteren, besonders einfachen Bauform des Submoduls ist das zwischen den Zwischenkreiskondensatoren abgreifbare Mittenpotential über zwei Mittelpunkt-Schalter unmittelbar auf den zugeordneten Mittelabgriff jeweils einer der beiden (Ausgangs-)Halbbrücke schaltbar. Als Mittelpunkt-Schalter wird hierbei ein Schalter bezeichnet, der den Mittelabgriff der Zwischenkreiskapazität unmittelbar mit dem Mittelabgriff der zugeordneten Ausgangs-Halbbrücke verbindet, und der insbesondere selbst nicht Teil der Vollbrücke ist. Als Mittelpunkt-Schalter werden insbesondere rückwärts sperrende Schalter eingesetzt. Alternativ hierzu können als Mittelpunkt-Schalter allerdings auch je zwei rückwärts leitende Schalter eingesetzt werden, die antiseriell zueinander geschaltet sind.

Bei einfachen Ausführungsvarianten des erfindungsgemäßen Submoduls ist eingangsseitig eine einfache Halbbrücke vorgesehen, wie sie auch in den Submodulen des herkömmlichen MHF-Umrichters vorhanden ist. Um die über den beiden Kondensatoren der Zwischenkreiskapazität jeweils abfallende Spannung besser, und insbesondere unabhängig von der Vollbrücke, symmetrisieren zu können, ist in einer weiterentwickelten Ausführungsform aber anstelle der gewöhnlichen Eingangshalbbrücke eine Serienschaltung zweier Halbbrücken vorgesehen. Eine erste dieser beiden Halbbrücken ist hierbei zwischen den Mittelabgriff der Zwischenkreiskapazität und eine Plus-Schiene des Zwischenkreises geschaltet. Die andere Eingangshalbbrücke ist entsprechend zwischen den Mittelabgriff der Zwischenkreiskapazität und eine Minus-Schiene des Zwischenkreises geschaltet. Die beiden in Reihe geschalteten Eingangshalbbrücken sind hierbei jeweils über ihre Mittelabgriffe auf die Leistungsquelle geschaltet. Durch die Verdopplung der Eingangshalbbrücke ist somit jedem Zwischenkreiskondensator jeweils ein eigener, unabhängig betreibbarer Hochsetzsteller zugeordnet.

Der erfindungsgemäße Fahrzeugantrieb umfasst mindestens einen Elektromotor zum Antrieb mindestens eines Fahrzeug-Rades. Der Fahrzeugantrieb umfasst des Weiteren die vorstehend beschriebene, erfindungsgemäße Stromrichterschaltung. Die Submodule der Stromrichterschaltung, von denen erfindungsgemäß mindestens eines bevorzugt alle in Drei-Punkt-Technik ausgeführt sind, sind hierbei lastseitig mit jeweils einer Phase des mindestens einen Elektromotors verschaltet.

Nachfolgend werden Ausführungsbeispiele der Erfindung anhand einer Zeichnung näher erläutert. Darin zeigen:
- FIG 1: im einem schematisch vereinfachten Schaltbild einen Fahrzeugantrieb mit zwei Elektromotoren zur Ansteuerung jeweils einen Rades eines Elektrofahrzeugs sowie mit einer modularen Stromrichterschaltung, wobei die Stromrichterschaltung sechs, jeweils in Drei-Punkt-Technik ausgeführte Submodule umfasst, und
- FIG 2-6: jeweils in einem Schaltbild ein beliebiges Submodul der Stromrichterschaltung gemäß FIG 1 in unterschiedlichen Ausführungsformen.

Einander entsprechende Teile und Größen sind in allen Figuren stets mit gleichen Bezugszeichen versehen.

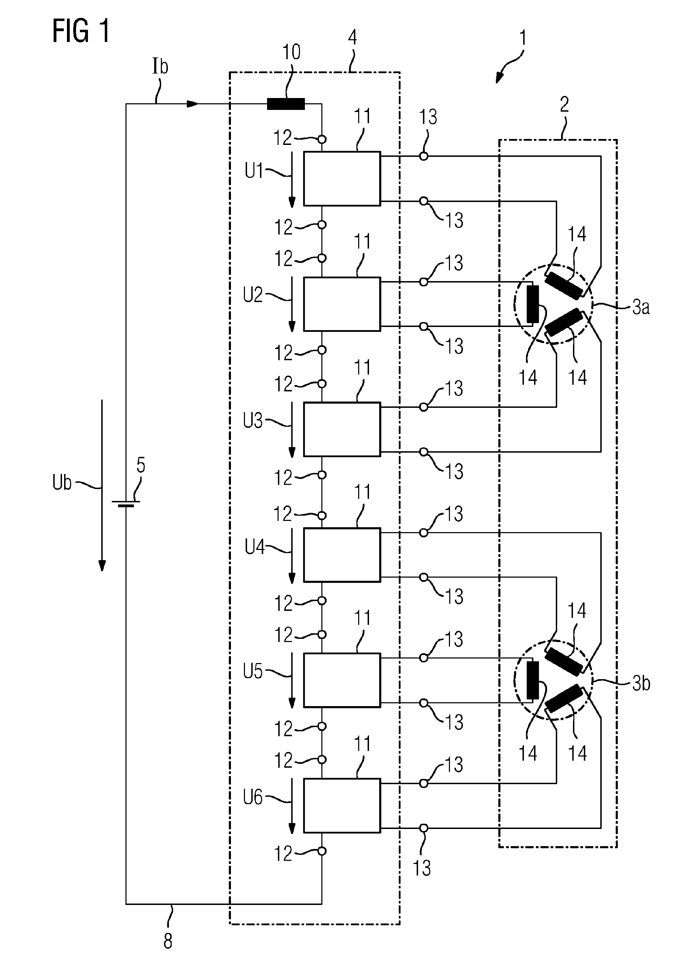

In FIG 1 ist in grober schematischer Vereinfachung ein Fahrzeugantrieb 1 für ein (nicht näher dargestelltes) Elektro-Fahrzeug dargestellt. Der Fahrzeugantrieb 1 umfasst einen elektrischen Verbraucher 2. Der Verbraucher 2 ist in FIG 1 vereinfacht durch zwei jeweils dreiphasige Elektromotoren 3a und 3b gebildet, von denen jeder (in nicht näher dargestellter Weise) ein zugeordnetes Rad des Fahrzeugs antreibt.

Der Fahrzeugantrieb 1 umfasst des Weiteren eine Stromrichterschaltung 4, die den Verbraucher 2 (also die Elektromotoren 3a,3b) mit elektrischer Leistung aus einer elektrischen Leistungsquelle versorgt. Bei der Leistungsquelle handelt es sich im dargestellten Beispiel um eine (Fahrzeug-)Batterie 5. Die Batterie 5 legt an die Stromrichterschaltung 4 über einen Batteriestromkreis 8 eine Batteriespannung Ub an und gibt an die Stromrichterschaltung 4 einen Batteriestrom mit einer Batteriestromstärke Ib ab.

Die Stromrichterschaltung 4 weist eingangsseitig eine Induktivität 10 auf, die schaltungstechnisch insbesondere durch eine Spule realisiert ist. An diese Induktivität 10 schließt sich eine Reihenschaltung aus sechs Submodulen 11 an. Jedes Submodul 11 ist hierbei mit zwei Eingangsklemmen 12 in den Batteriestromkreis 8 geschaltet. Zwischen den Eingangsklemmen 12 eines jeden der Submodule 11 fällt hierbei jeweils eine Teilspannung Ui (mit 1=1, 2, 3,...,6) ab.

Lastseitig ist jedes der Submodule 11 jeweils über zwei Ausgangsklemmen 13 an eine jeweils zugeordnete Phase 14, d.h. einen Wicklungsstrang eines der Elektromotoren 3a und 3b angeschlossen. Basierend auf den Teilspannungen Ui versorgen die Submodule 11 die Elektromotoren 3a und 3b mit elektrischer Energie.

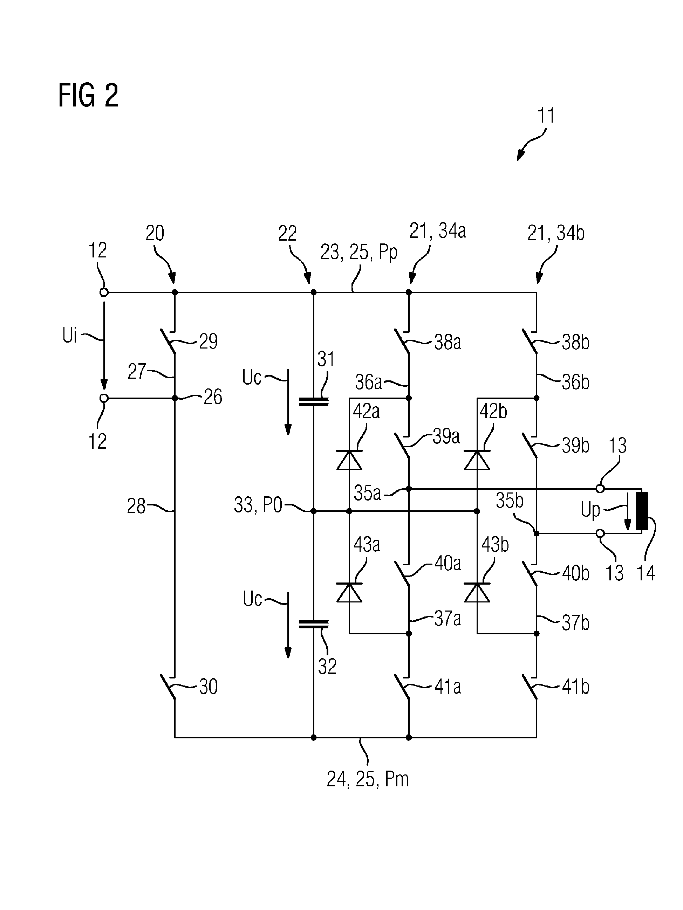

Eines der identisch aufgebauten Submodule 11 ist in FIG 2 näher dargestellt. Wie dieser Darstellung zu entnehmen ist, weist das Submodul 11 eine (Eingangs-)Halbbrücke 20 sowie eine (Ausgangs-)Vollbrücke 21 auf. Das Submodul 11 umfasst des Weiteren eine Zwischenkreiskapazität 22. Die Halbbrücke 20, die Vollbrücke 21 und die Zwischenkreiskapazität 22 sind hierbei parallel zwischen eine Plus-Schiene 23 und eine Minus-Schiene 24 eines Zwischenkreises 25 geschaltet.

Die Halbbrücke 20 weist zwei durch einen Mittelabgriff 26 getrennte Zweige 27 und 28 auf, von denen sich der Zweig 27 zwischen dem Mittelabgriff 26 und der Plus-Schiene 23, und der Zweig 28 zwischen dem Mittelabgriff 26 und der Minus-Schiene 24 erstreckt. In jedem der Zweige 27 und 28 ist je ein (Halbleiter-)Schalter 29 bzw. 30 angeordnet, der jeweils durch einen MOSFET gebildet ist. Über den Schalter 29 ist die Halbbrücke 20 in den Batteriestromkreis 8 geschaltet. Die Eingangsklemmen 12 des Submoduls 11 sind somit beidseitig des Schalters 29 mit der Plus-Schiene 23 des Zwischenkreises 25 bzw. mit dem Mittelabgriff 26 verschaltet.

Die Zwischenkreiskapazität 22 ist durch eine Reihenschaltung von zwei (Zwischenkreis-)Kondensatoren 31 und 32 gebildet, über denen jeweils eine (der halben Zwischenkreisspannung entsprechende) Kondensatorspannung Uc anliegt. Entsprechend liegt ein den Kondensatoren 31 und 32 zwischengeschalteter Mittelabgriff 33 auf einem elektrischen Mittenpotential P0, das dem Betrag nach zwischen dem elektrischen Potential Pp der Plusschiene 23 und dem elektrischen Potential Pm der Minusschiene 24 liegt.

Die Vollbrücke 21 ist gebildet aus zwei parallelgeschalteten Halbbrücken 34a und 34b. Jede der beiden Ausgangshalbbrücken 34a,34b wird wiederum gebildet aus jeweils zwei durch einen Mittelabgriff 35a bzw. 35b getrennten Zweigen 36a bzw. 36b und 37a bzw. 37b, wobei sich die Zweige 36a,36b jeweils zwischen dem zugehörigen Mittelabgriff 35a bzw. 35b und der Plus-Schiene 23 erstrecken, während sich die Zweige 37a und 37b jeweils zwischen dem zugeordneten Mittelabgriff 35a bzw. 35b und der Minus-Schiene 24 erstrecken. Zwischen den Mittelabgriffen 35a und 35b ist die zugeordnete Motorphase 14 verschaltet.

In jedem Zweig 36a bzw. 36b und 37a bzw. 37b der Vollbrücke 21 sind in Reihenschaltung zueinander jeweils zwei Schalter angeordnet. So umfassen die Zweige 36a und 36b jeweils einen äußeren (der Plus-Schiene 23 zugewandten) Schalter 38a bzw. 38b und einen inneren (dem Mittelabgriff 35a bzw. 35b zugewandten) Schalter 39a bzw. 39b. Die beiden Zweige 37a und 37b umfassen jeweils einen inneren (dem Mittelabgriff 35a bzw. 35b zugewandten) Schalter 40a bzw. 40b sowie einen äußeren (der Minus-Schiene 24 zugewandten) Schalter 41a bzw. 41b.

Über Dioden 42a bzw. 42b ist der Mittelabgriff 33 der Zwischenkreiskapazität 22 mit dem jeweiligen Zweig 36a bzw. 36b der Halbbrücke 34a bzw. 34b verschaltet. Über je eine weitere Diode 43a und 43b ist der Mittelabgriff 33 mit dem jeweiligen Zweig 37a bzw. 37b der Halbbrücken 34a bzw. 34b verbunden. Die Dioden 42a, 42b sind dabei jeweils zwischen den Schaltern 38a,38b und 39a, 39b der jeweils zugeordneten Halbbrücke 34a bzw. 34b angeklemmt. Ebenso sind die Dioden 43a und 43b jeweils zwischen den Schaltern 40a, 40b und 41a, 41b der jeweils zugeordneten Halbbrücke 34a bzw. 34b angeklemmt.

Die Schalter 38a, 38b, 39a, 39b, 40a, 40b, 41a und 41b sind vorzugsweise wiederum als MOSFET ausgebildet.

Durch die Verschaltung der Vollbrücke 21 mit dem Mittelabgriff 33 der Zwischenkreiskapazität 22, und dem daran anliegenden Mittenpotential P0 ist die Vollbrücke 21 zu einem Drei-Punkt-Stromrichter erweitert, in dem - je nach Stellung der Schalter 38a, 38b, 39a, 39b, 40a, 40b, 41a, 41b - sowohl das Potential Pp der Plus-Schiene 23 als auch das Potential Pm der Minus-Schiene 24 als auch das Mittenpotential P0 an jede der Ausgangsklemmen 13 angelegt werden kann. Durch Verkettung dieser Potentialniveaus kann somit die Motorphase 14 mit einer Phasenspannung Up beaufschlagt werden, die die Werte +2 Uc, +Uc, 0, -Uc und -2 Uc annehmen kann.

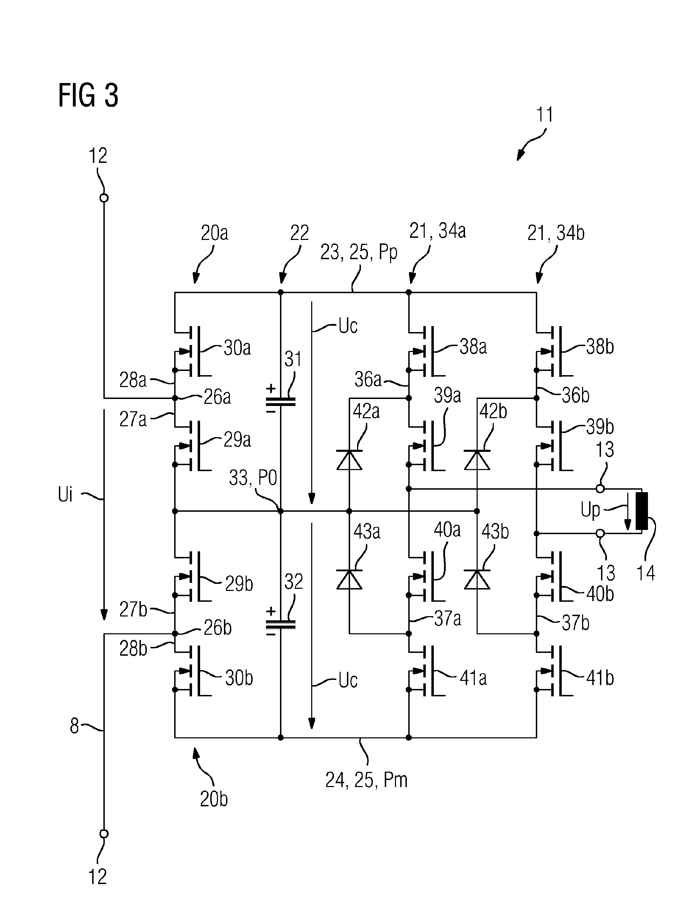

In FIG 3 ist eine alternative Ausführungsform des Submoduls 11 dargestellt. Das Submodul 11 gemäß FIG 3 unterscheidet sich von der Ausführungsvariante gemäß FIG 2 dadurch, dass anstelle der einfachen Halbbrücke 20 aus FIG 2 eine Serienschaltung zweier (Eingangs-)Halbbrücken 20a und 20b vorgesehen ist. Die Halbbrücke 20a ist hierbei dem Zwischenkreiskondensator 31 parallelgeschaltet, während die Halbbrücke 20b dem Zwischenkreiskondensator 32 parallelgeschaltet ist. Das Submodul 11 ist über die in Reihe liegenden Schalter 29a und 29b der Halbbrücken 20a und 20b in den Batteriestromkreis 8 geschaltet. Die Eingangsklemmen 12 des Submoduls 11 sind somit mit den jeweiligen Mittelabgriffen 26a bzw. 26b der Halbbrücken 20a und 20b verschaltet.

Die doppelte Ausführung der Eingangshalbbrücke 20a, 20b hat zur Folge, dass die Kondensatorspannung Uc für jeden Kondensator 31 und 32 separat und unabhängig geregelt werden kann. Dies erlaubt eine besonders einfache und präzise Symmetrisierung der Kondensatoren 31 und 32, d.h. eine einfache und präzise Angleichung der über den beiden Kondensatoren 31 und 32 abfallenden Kondensatorspannungen Uc.

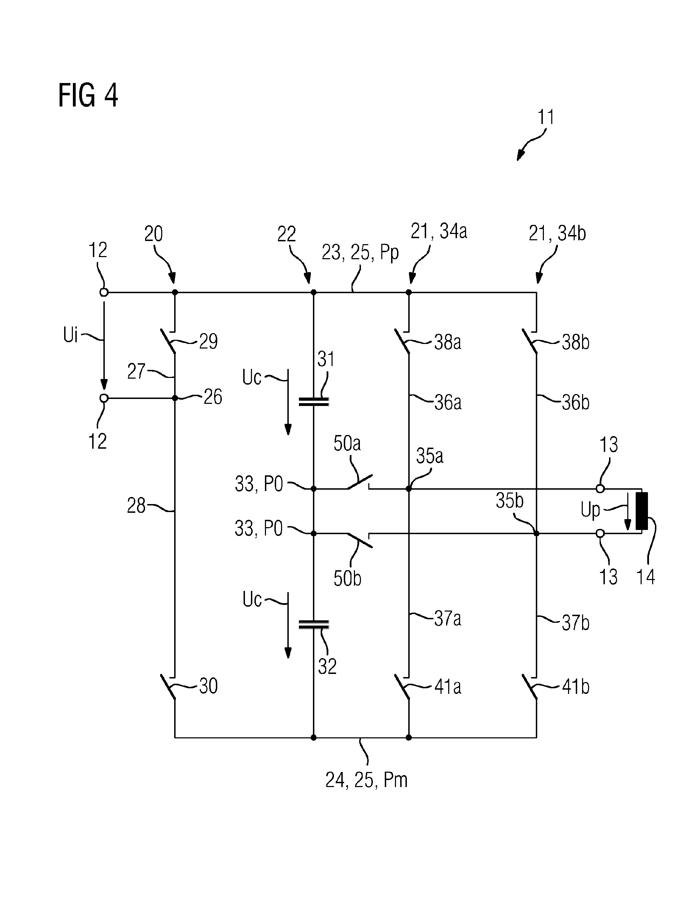

In FIG 4 ist ein weiteres Ausführungsbeispiel des Submoduls 11 dargestellt. In dieser Variante unterscheidet sich das Submodul 11 von der Ausführungsform gemäß FIG 2 dadurch, dass in den Zweigen 36a, 36b, 37a, 37b der Vollbrücke 21 nur jeweils ein Schalter, beispielsweise der jeweils äußere Schalter 38a, 38b, 41a bzw. 41b vorgesehen ist. Die Mittelabgriffe 35a und 35b der Ausgangshalbbrücken 34a und 34b sind hier über je einen Mittelpunkt-Schalter 50a bzw. 50b unmittelbar mit dem Mittelabgriff 33 der Zwischenkreiskapazität 22 verschaltet. Bei den Mittelpunkt-Schaltern 50a und 50b handelt es sich um rückwärts sperrende Halbleiter-Schalter, insbesondere IGBTs.

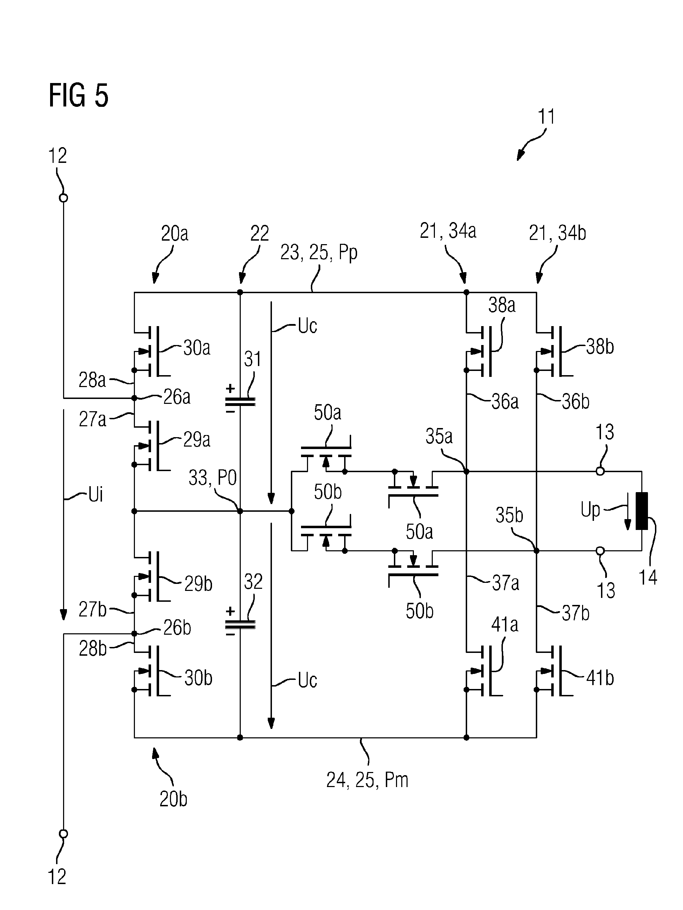

Das in FIG 5 dargestellte weitere Ausführungsbeispiel des Submoduls 11 leitet sich aus den Ausführungsvarianten gemäß FIG 3 und 4 ab. So sind bei dem Submodul 11 gemäß FIG 5 die im Zusammenhang mit FIG 3 bereits beschriebenen seriell zueinander geschalteten Eingangshalbbrücken 20a und 20b vorgesehen. Analog zu dem Ausführungsbeispiel gemäß FIG 4 sind allerdings die Ausgangshalbbrücken 34a und 34b der Vollbrücke 21 in jedem Zweig 36a, 36b, 37a, 37b mit lediglich einem Schalter 38a, 38b, 41a bzw. 41b bestückt. Das Mittenpotential PO wird hierbei wiederum über Mittelpunkt-Schalter 50a bzw. 50b auf den jeweils zugeordneten Mittelabgriff 35a bzw. 35b der zugeordneten Halbbrücke 34a bzw. 34b gelegt.

Abweichend von dem Ausführungsbeispiel gemäß FIG 4 werden als Mittelpunkt-Schalter 50a und 50b hier rückwärts leitende MOSFET eingesetzt. Um mit den Mittelpunkt-Schaltern 50a und 50b beide Stromrichtungen sperren zu können, sind hierbei jeweils zwei Mittelpunktschalter 50a, 50b antiseriell zueinander geschaltet.

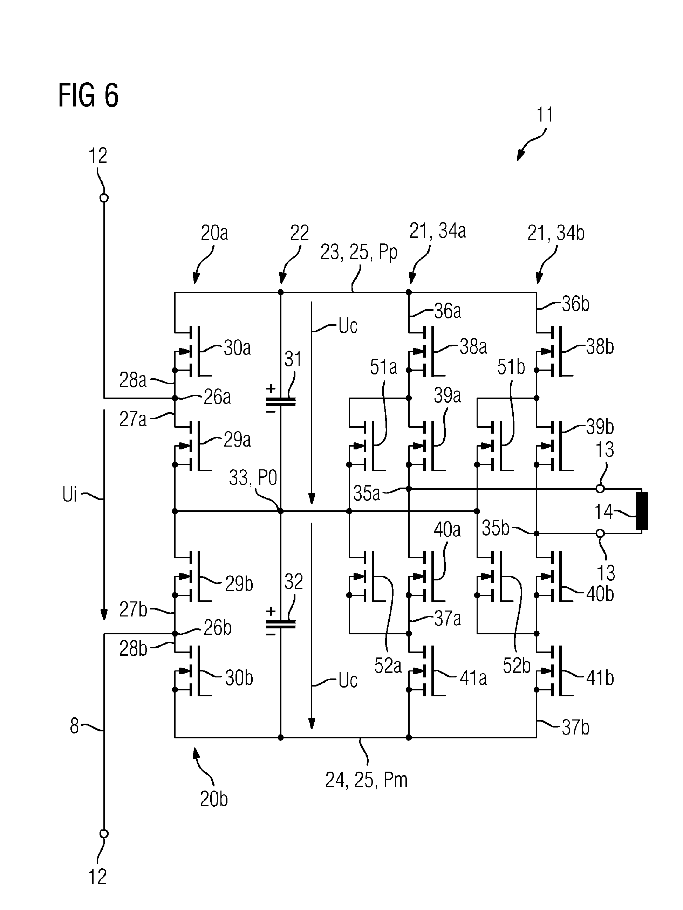

Das in FIG 6 dargestellte Ausführungsbeispiel des Submoduls 11 geht wiederum aus dem Ausführungsbeispiel gemäß FIG 3 hervor, unterscheidet sich von letzterem aber dadurch, dass die Dioden 42a, 42b, 43a, 43b durch aktive Schalter 51a, 51b und 52a bzw. 52b ersetzt sind. Der Einsatz der Schalter 51a, 51b, 52a, 52b ermöglicht hierbei eine besonders gute Symmetrisierung der Schaltverluste unter den Schaltern 38a, 38b,39a, 39b, 40a, 40b, 41a, 41b.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

## Patentansprüche

1. Stromrichterschaltung (4), umfassend wenigstens zwei Submodule (11) in Reihenschaltung, die über eine Induktivität (10) elektrische Leistung aus einer eine Gleichspannung (Ub) abgebenden Leistungsquelle (5) bezieht,
- wobei jedes Submodul (11) eingangsseitig eine einphasige Halbbrücke (20,20a,20b) und lastseitig eine einphasige Vollbrücke (21) aufweist, und
- wobei die Halbbrücke (20,20a,20b) und die Vollbrücke (21) gleichspannungsseitig zusammen mit einer Zwischenkreiskapazität (22) parallel zueinander in einen Zwischenkreis (25) geschaltet sind,
**dadurch gekennzeichnet, dass** die Vollbrücke (21) mindestens eines Submoduls (11) zu einem Drei-Punkt-Stromrichter erweitert ist.

2. Stromrichterschaltung (4) nach Anspruch 1, **dadurch gekennzeichnet, dass** die Zwischenkreiskapazität (22) aus einer Reihenschaltung mindestens zweier Zwischenkreiskondensatoren (31,32) gebildet ist, wobei ein zwischen den Zwischenkreiskondensatoren (31,32) anliegendes elektrisches Mittenpotential (P0) reversibel auf einen jeweiligen Mittelabgriff (35a,35b) jeder der beiden Halbbrücken (34a,34b) der Vollbrücke (21) schaltbar ist.

3. Stromrichterschaltung (4) nach Anspruch 2, **dadurch gekennzeichnet, dass** in jeweils beiden Zweigen (36a,36b,37a,37b) jeder der beiden Halbbrücken (34a,34b) der Vollbrücke (21) zwei in Serie geschaltete Schalter (38a, 39a; 38b,39b;40a,41a;40b,41b) angeordnet sind, und wobei das (P0) jeweils über eine Diode (42a,42b,43a,43b) zwischen den demselben Zweig (36a,36b,37a,37b) zugeordneten Schaltern (38a,39a;38b,39b;40a,41a;40b,41b) angeklemmt ist.

4. Stromrichterschaltung (4) nach Anspruch 2, **dadurch gekennzeichnet, dass** in jeweils beiden Zweigen (36a,36b,37a,37b) jeder der beiden Halbbrücken (34a,34b) der Vollbrücke (21) zwei in Serie geschaltete Schalter (38a, 39a;38b,39b;40a,41a; 40b,41b) angeordnet sind, und wobei das Mittenpotential (P0) jeweils über einen Schalter (51a,51b, 42a,52b) zwischen den demselben Zweig (36a,36b,37a,37b) zugeordneten Schaltern (38a,39a;38b,39b; 40a,41a;40b,41b) angeklemmt ist.

5. Stromrichterschaltung (4) nach Anspruch 2, **dadurch gekennzeichnet, dass** das Mittenpotential (P0) über jeweils einen rückwärts sperrenden Mittelpunkt-Schalter (50a,50b) oder jeweils eine Antiseriellschaltung zweier rückwärts leitender Mittelpunkt-Schalter (50a,50b) unmittelbar auf jeweils einen zugeordneten Mittelabgriff (35a,35b) der beiden Halbbrücken (34a,34b) der Vollbrücke (21) schaltbar ist.

6. Stromrichterschaltung(4) nach einem der Ansprüche 2 bis 5, **dadurch gekennzeichnet, dass** die eingangsseitige Halbbrücke (20) zu einer Seriellschaltung zweier Halbbrücken (20a,20b) erweitert ist, von denen eine zwischen den Mittelabgriff (33) der Zwischenkreiskapazität (22) und eine Plus-Schiene (23) des Zwischenkreises (25) geschaltet ist, und von denen die zweite zwischen den Mittelabgriff (33) der Zwischenkreiskapazität (22) und eine Minus-Schiene (24) des Zwischenkreises (25) geschaltet ist.

7. Fahrzeugantrieb (1) mit mindestens einem Elektromotor (3a,3b) zum Antrieb mindestens eines Fahrzeug-Rades sowie mit der Stromrichterschaltung (4) gemäß einem der Ansprüche 1 bis 6, wobei die Submodule (11) lastseitig mit dem mindestens einen Elektromotor (3a,3b) verschaltet sind.
